# EUROPÄISCHE PATENTANMELDUNG

(11) **EP 1 038 695 A2**
(43) Veröffentlichungstag der Anmeldung: **27.09.2000**
(21) Anmeldenummer: 00104893.3
(22) Anmeldetag: 08.03.2000
(51) Int. Cl.: B60B 33/00

(54) **Rolle**

(30) Priorität: 24.03.1999 DE 19913194
(71) Anmelder: WANZL METALLWARENFABRIK GMBH, D-89336 Leipheim (DE)
(72) Erfinder: Deyerler, Kurt, 89257 Illertissen (DE); Kriz, Peter, 73235 Weilheim/ Teck (DE)

(57) **Zusammenfassung**

Die Erfindung betrifft eine Rolle (1) mit einer zwei Gabelschenkel (3, 4) aufweisenden Radgabel (2), mit einer von den Gabelschenkeln (3, 4) getragenen, horizontal angeordneten Achse (11) und mit einem auf der Achse (11) drehbar angeordneten Laufrad (22) wobei die Achse (11) mit einem Ende an einem ersten Gabelschenkel (3) abgestützt ist, das Laufrad (22) durchdringt und mit dem anderen Ende durch ein Schraubmittel (19), welches in einer in der Achse (11) befindlichen Längsbohrung (13) eingeführt ist, gegenüber dem zweiten Gabelschenkel (4) verspannt ist.
Die Erfindung zeichnet sich dadurch aus, dass die Achse (11) aus Kunststoff besteht und dass die Längsbohrung (13) gewindelos ausgebildet ist.

## Beschreibung

Die Erfindung betrifft eine Rolle mit einer zwei Gabelschenkel aufweisenden Radgabel, mit einer von den Gabelschenkeln getragenen, horizontal angeordneten Achse und mit einem auf der Achse drehbar angeordneten Laufrad wobei die Achse mit einem Ende an einem ersten Gabelschenkel abgestützt ist, das Laufrad durchdringt und mit dem anderen Ende durch ein Schraubmittel, welches in einer in der Achse befindlichen Längsbohrung eingeführt ist, gegenüber dem zweiten Gabelschenkel verspannt ist.

Bei bekannten Rollen dieser Art besteht die Achse aus Stahl und die Längsbohrung der Achse ist als Gewindebohrung ausgebildet, in welcher das Schraubmittel eingeschraubt ist. Bei der Herstellung der Achse müssen das Gewinde eingeschnitten und beim Zusammenbau der Rolle das Schraubmittel in die Längsbohrung eingeschraubt werden. Beide Arbeitsgänge sind, zumal es sich bei Rollen dieser Art um Massenartikel handelt, zeitaufwendig und deshalb teuer.

Die Aufgabe der Erfindung besteht darin, eine Rolle der hier vorliegenden Art so weiterzuentwickeln, daß die Kosten für ihre Herstellung spürbar gesenkt werden können.

Die Lösung der Aufgabe besteht darin, daß die Achse aus Kunststoff besteht und daß die Längsbohrung gewindelos ausgebildet ist.

Die Achse läßt sich durch ein Mehrfach-Kunststoff-Spritzgußwerkzeug in einem einzigen Arbeitsgang in mehreren Stücken auf einmal herstellen. Dies ist aus Sicht der Herstellkosten äußerst günstig, zumal in der Längsbohrung kein Gewinde vorgesehen werden muß. Beim Zusammenbau der Rolle wird das Schraubmittel in einem einzigen kurzen Arbeitsgang in die Längsbohrung eingedrückt. Ein zeitaufwendiges Einschrauben entfällt, so daß auch dieser Arbeitsgang wenig Zeit beansprucht und somit die Montagekosten niedrig hält. Sollte es aus irgendwelchen Gründen erforderlich sein, das Schraubmittel wieder von der Achse zu lösen, braucht dieses nur auf herkömmliche Weise aus der Längsbohrung herausgeschraubt werden. Das Schraubmittel oder die Achse brauchen nicht zerstört werden, was ebenfalls einen großen Vorteil bedeutet.
Ein weiterer Vorteil besteht schließlich darin, daß an der freien Stirnseite der Achse, von welcher aus das Schraubmittel in die Längsbohrung eingedrückt wird, eine Anzahl von kleinen Erhöhungen angeformt ist, die vom eingesetzten Schraubmittel gestaucht wird und somit eine Druckspannung aufbaut, welche ein selbstständiges Lösen des Schraubmittels verhindern hilft.

Die Erfindung wird anhand eines Ausführungsbeispieles näher erläutert. Es zeigt
Fig. 1 eine Rolle sowie
Fig. 2 die Achse der Rolle.

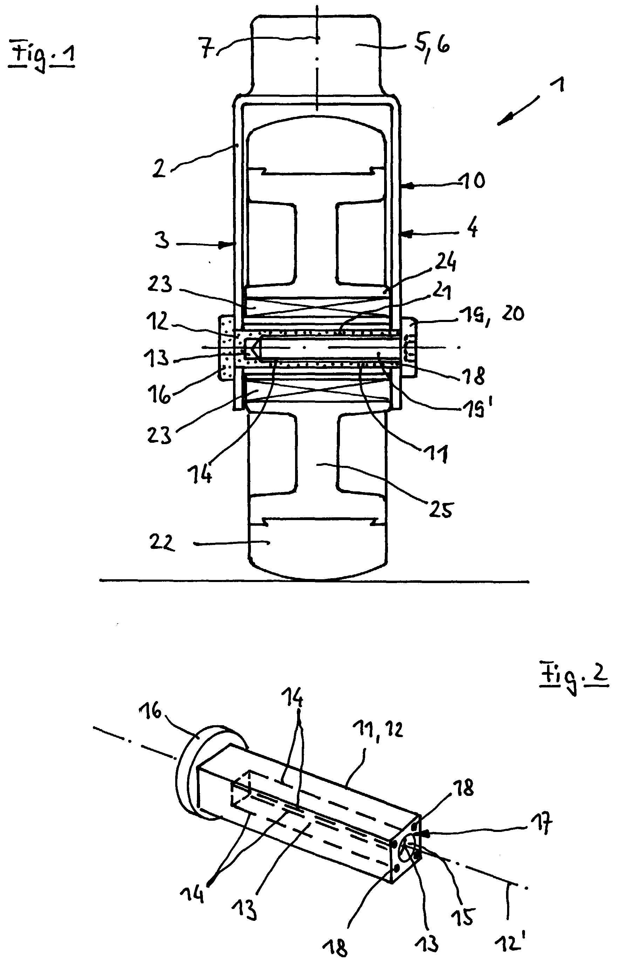

Die in Fig. 1 gezeigte Rolle 1 weist eine Radgabel 2 mit zwei Gabelschenkeln 3, 4 auf. Die Gabelschenkel 3,4 können nach oben in einen Schwenkkopf 5 münden, so daß die Rolle 1, wie im Beispiel gezeigt, als eine um eine senkrechte Achse 7 verschwenkbare Lenkrolle 6 verwendbar ist. Die Gabelschenkel 3, 4 können aber auch zu einer horizontalen, nicht näher dargestellten Kopfplatte führen, durch welche die Rolle 1 an ein Fahrgestell eines Gerätes anschraubbar ist wobei in diesem Falle die Rolle 1 als sogenannte Bockrolle gestaltet ist. Die Gabelschenkel 3, 4 tragen eine horizontal angeordnete, aus elastischem Kunststoff bestehende Achse 11, welche ein Laufrad 22 durchdringt, das auf der Achse 11 drehbar angeordnet ist. Nicht näher dargestellte Lager 23, beispielsweise Gleit- oder Kugellager, die unter Abstützung auf der Achse 11 in die Nabe 24 des Laufrades 22 eingesetzt sind, sorgen für ein leichtes Drehen des Laufrades 22. Der Radkörper 25 des Laufrades 22 kann in bekannter Weise unterschiedlich gestaltet sein. Die aufgeschnitten dargestellte Achse 11 stützt sich im Beispiel mit einem Teil ihres Schaftes 12 und mit einem an einem Ende angeordneten Bund 16 an einem Durchbruch 9 eines der beiden Gabelschenkel 3 oder 4 ab. Der Schaft 12 der Achse 11 führt horizontal zum anderen Gabelschenkel 4, durchdringt diesen und endet etwa plan zur Außenseite 10 des zweiten Gabelschenkels 4. Ausgehend von jenem Ende der Achse 11, das dem Bund 16 gegenüberliegt, führt eine Längsbohrung 13 im Schaft 12 der Achse 11 in Richtung Bund 16. Die Längsbohrung 13 ist bevorzugt als Bohrung mit quadratischem Querschnitt gestaltet. In die Längsbohrung 13 ist ein mit einem Kopf 20 ausgestattetes Schraubmittel 19 mit seinem Schaft 19' eingeführt oder eingepreßt. Das Schraubmittel 19 liegt mit seinem Kopf 20 am Gabelschenkel 4 und an vier kleinen, an der Stirnseite 17 der Achse 11 befindlichen Erhöhungen 18 an. Der Schaft 19' des mit einem Außengewinde versehenen Schraubmittels 19 ist so in die Längsbohrung 13 eingedrückt, daß sich die Gewindegänge 21 des Schaftes 19' mit den vier Längskanten 14 der Längsbohrung 13 verkrallen, so daß das Schraubmittel 19 in dieser Lage fixiert bleibt. Die Kraft, die zum Einsetzen des Schraubmittels 19 erforderlich ist, ist so gewählt, daß aufgrund vorbestimmter Maßtoleranzen die Gabelschenkel 3, 4 leicht gegeneinander gedrückt sind und der Kopf 20 des Schraubmittels 19 die vier Erhöhungen 18 staucht, so daß diese eine Gegenkraft auf den Kopf 20 des Schraubmittels 19 ausüben, um ein selbsttätiges Lösen des Schraubmittels 19 zu verhindern. Ist es erforderlich, das Schraubmittel 19 von der Achse 11 zu lösen, genügt es, das Schraubmittel 19 durch Drehen in die richtige Richtung - bei Rechtsgewinde nach links - aus der Längsbohrung 13 herauszuschrauben. Diese Demontage erfolgt ohne irgendwelche Zerstörungen zu verursachen, so daß das Schraubmittel 19, wenn erforderlich, wieder in die Längsbohrung 13 der zähelastischen Achse 11 eingeschraubt oder eingedrückt werden kann.

Fig. 2 zeigt die in Fig. 1 verwendete Achse 11. Die Achse 11 besteht aus Kunststoff, beispielsweise aus Polyamid PA 6. Die Achse 11 weist an einem Ende den Bund 16 auf. Der Schaft 12 der Achse 11 besitzt im Beispiel einen quadratischen Querschnitt. Der Schaft 12 kann aber auch einen runden Querschnitt aufweisen. Von der dem Bund 16 gegenüberliegenden Stirnseite 17 des Schaftes 12 aus führt die Längsbohrung 13 entlang der Längsachse 12' des Schaftes 12 in Richtung zum Bund 16. Die Längsbohrung 13 weist einen quadratischen Querschnitt auf, so daß vier Längskanten 14 gebildet sind. Zu Beginn der Längsbohrung 13 ist diese mit einem kurzen zylindrischen Ansatz 15 versehen, dessen Durchmesser so gewählt ist, daß in diesem Bereich die Längskanten 14 unterbrochen oder nur in Nuancen vorhanden sind. Durch den Ansatz 15 wird es ermöglicht, das in die Längsbohrung 13 einzudrückende Schraubmittel 19 zu führen und zu zentrieren, bevor dieses in die Längsbohrung 13 eingeführt wird. An der Stirnseite 17 sind die vier Erhöhungen 18, deren Zweck bereits vorab beschrieben worden ist, angeordnet.

Aus Gründen einer besseren Darstellung wurde bei der Schnittdarstellung in Fig. 1 auf eine Schraffur der Einzelteile verzichtet.

## Patentansprüche

1. Rolle (1) mit einer zwei Gabelschenkel (3, 4) aufweisenden Radgabel (2), mit einer von den Gabelschenkeln (3, 4) getragenen, horizontal angeordneten Achse (11) und mit einem auf der Achse (11) drehbar angeordneten Laufrad (22) wobei die Achse (11) mit einem Ende an einem ersten Gabelschenkel (3) abgestützt ist, das Laufrad (22) durchdringt und mit dem anderen Ende durch ein Schraubmittel (19), welches in einer in der Achse (11) befindlichen Längsbohrung (13) eingeführt ist, gegenüber dem zweiten Gabelschenkel (4) verspannt ist, dadurch **gekennzeichnet,** dass die Achse (11) aus Kunststoff besteht und dass die Längsbohrung (13) gewindelos ausgebildet ist.

2. Rolle nach Anspruch 1, dadurch **gekennzeichnet,** dass die Längsbohrung (13) einen quadratischen Querschnitt aufweist, durch den vier Längskanten (14) gebildet sind.

3. Rolle nach Anspruch 1 oder 2, dadurch **gekennzeichnet,** dass das Schraubmittel (19) mit seinem Außengewinde mit den Längskanten (14) der Längsbohrung (13) verbunden ist.

4. Rolle nach einem der Ansprüche 1 bis 3, dadurch **gekennzeichnet,** dass an der Stirnseite (17) der Achse (11) Erhöhungen (18) angeordnet sind.

5. Rolle nach einem der Ansprüche 1 bis 4, dadurch **gekennzeichnet,** dass an der der Stirnseite (17) gegenüberliegenden Seite der Achse (11) ein Bund (16) angeordnet ist.

6. Rolle nach einem der Ansprüche 1 bis 5, dadurch **gekennzeichnet,** dass die Achse (11) einen Schaft (12) mit quadratischem oder rundem Querschnitt aufweist.

7. Rolle nach einem der Ansprüche 1 bis 6, dadurch **gekennzeichnet,** dass die Längsbohrung (13) von der Stirnseite (17) aus in die Achse (11) gerichtet ist,

8. Rolle nach einem der Ansprüche 1 bis 7, dadurch **gekennzeichnet,** dass am Beginn der Längsbohrung (13) ein Ansatz (15) zur Führung des Schraubmittels (19) vorgesehen ist.

9. Rolle nach einem der Ansprüche 1 bis 8, dadurch **gekennzeichnet,** dass die Achse (11) aus Polyamid gefertigt ist.
